# EUROPÄISCHE PATENTSCHRIFT

(11) **EP 1 785 439 B1**
(45) Veröffentlichungstag und Bekanntmachung des Hinweises auf die Patenterteilung: **24.03.2010**
(21) Anmeldenummer: 06022681.8
(22) Anmeldetag: 31.10.2006
(51) Int. Cl.: C08G 18/28, C08J 9/00

(54) **Halogenfreie, flammgeschützte Polyurethanschaumstoffe**
Halogenfree fire retardant polyurethane foams
Mousse de polyuréthanne retardateur de flamme non halogène

(30) Priorität: 11.11.2005 DE 102005053889
(43) Veröffentlichungstag der Anmeldung: 16.05.2007
(73) Patentinhaber: LANXESS Deutschland GmbH, 51369 Leverkusen (DE)
(72) Erfinder: Hansel, Jan-Gerd, Dr., 51069 Köln (DE); Tebbe, Heiko, Dr., 41539 Dormagen (DE)

(56) Entgegenhaltungen:
- DE-A1- 19 744 426
- US-A- 4 165 411

## Beschreibung

Die vorliegende Erfindung betrifft flammgeschützte Polyurethanschaumstoffe, die als Flammschutzmittel 2-Hydroxyalkanphosphonate und/oder 3-Hydroxyalkanphosphonate enthalten, sowie ein Verfahren zur Herstellung solcher Schaumstoffe und deren Verwendung.

Polyurethanschaumstoffe werden in vielen Bereichen, wie Möbel, Matratzen, Transport, Bau und technische Dämmung als Kunststoffe eingesetzt. Zum Erreichen hoher Flammschutzanforderungen, wie sie für Materialien u. a. für den Automobil-, Bahn- und Flugzeuginnenausstattungsbereich sowie die Bauisolierung gefordert sind, müssen Polyurethanschaumstoffe in der Regel mit Flammschutzmitteln ausgerüstet werden. Hierzu ist eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei Verwendung fester Flammschutzmittel wie z. B. Melamin, Aluminiumhydroxid, Ammoniumpolyphosphat und Ammoniumsulfat dosiertechnische Probleme auf, die vielfach Modifikationen der Verschäumanlagen, d. h. aufwändige Umbauten und Anpassungen notwendig machen.

Die häufig eingesetzten Flammschutzmittel Tris(chlorethyl)phosphat, Tris(chlorisopropyl)-phosphat und Tris(2,3-dichlorisopropyl)phosphat stellen leicht dosierbare Flüssigkeiten dar. Allerdings werden aus ökotoxikologischen Gesichtspunkten sowie aufgrund verbesserter Brandnebenerscheinungen bezüglich Rauchgasdichte und Rauchgastoxizität immer öfter halogenfreie Flammschutzmittelsysteme bevorzugt. Auch aus anwendungstechnischen Gründen können halogenfreie Flammschutzmittel von besonderem Interesse sein. So beobachtet man z. B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoff-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Als flüssige, halogenfreie Flammschutzmittel werden in Polyurethanschaumstoffen Alkylphosphate, wie beispielsweise Triethylphosphat, Arylphosphate, wie beispielsweise Diphenylkresylphosphat, und Alkylphosphonate, wie beispielsweise Dimethylpropanphosphonat, eingesetzt.

Von offenzelligen Polyurethanweichschaumsystemen für die Automobil-Innenausstattung wird in letzter Zeit immer mehr gefordert, dass die gasförmigen Emissionen (Volatile Organic Compounds, VOC) und vor allem die kondensierbaren Emissionen (Fogging) aus diesen Schäumen niedrige Grenzwerte nicht überschreiten sollen. Diesen Anforderungen werden die oben genannten Flüssigkeiten aufgrund ihrer relativ niedrigen Molgewichte und der daraus resultierenden zu hohen Flüchtigkeit nicht mehr gerecht.

Unter Fogging versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 quantitativ beurteilt werden. Die Automobilindustrie fordert typischerweise, dass das Foggingkondensat nach der Methode DIN 75 201 B weniger als 1 mg betragen darf.

Lösungen im Sinne niedriger Foggingbeiträge bieten reaktive Flammschutzmittel. Der Begriff "reaktive Flammschutzmittel" bezeichnet dabei Flammschutzmittel, die gegenüber Isocyanatgruppen reaktive Hydroxylgruppen tragen. Diese reagieren mit dem zur Schaumherstellung eingesetzten Polyisocyanat und werden so in das Polyurethan eingebaut. Daher zeigen sie nur sehr geringe Foggingbeiträge. Etliche reaktive Flammschutzmittel auf Basis von Chlor-, Brom- oder Phosphorverbindungen sind bekannt. Aus oben genannten Gründen werden halogenfreie, reaktive Flammschutzmittel in vielen Anwendungen, wie beispielsweise der Automobil-Innenausstattung, bevorzugt. Da die Flammschutzwirkung von Phosphorverbindungen im Allgemeinen mit steigendem Phosphorgehalt besser wird, sind reaktive Flammschutzmittel mit hohem Phosphorgehalt besonders bevorzugt.

Halogenfreie, reaktive Flammschutzmittel auf Basis von Phosphorsäureestern sind in DE 43 42 972 A1 (= US 5 608 100) beschrieben. Ein solches Produkt mit dem Markennamen Exolit^{®} OP 550 der Clariant GmbH enthält 17 % Phosphor, hat eine Hydroxylzahl von 130 mg KOH/g und eine Viskosität von 2.000 mPas (25 °C; siehe EP 1 142 939 B1, S.4, Z. 33). Diese hohe Viskosität erschwert die Verarbeitung auf den üblichen, in der Polyurethanschaumstoff-Herstellung verwendeten Maschinen.

DE 199 27 548 C2 (= US 6 380 273) und EP 1 142 939 B1 (= US 6 518 325) beschreiben halogenfreie, reaktive Phosphonsäureester als Flammschutzmittel für Polyurethanschaumstoffe. Diese Produkte enthalten nur 12 - 13 % Phosphor, weisen aber niedrige Viskositäten von unter 300 mPas (25°C) auf. Nachteilig sind die hohen Hydroxylzahlen von über 400 mg KOH/g, die eine Verarbeitung dieser reaktiven Phosphonsäureester zu fehlerfreien Schaumstoffen erschwert.

Die Hydroxylzahl ist ein Maß für die Konzentration von Hydroxylgruppen in einer Substanz. Sie gibt die Menge Kaliumhydroxid in mg an, in der die gleiche molare Menge Hydroxidionen enthalten ist, wie Hydroxylgruppen in 1 g der Substanz enthalten sind.

Hohe Hydroxylzahlen eines reaktiven Flammschutzmittels sind nachteilig, weil damit schon geringe Mengen an Flammschutmittel eine Rezepturanpassung erforderlich machen. Die Schaumqualität eines Polyurethanschaumstoffs hängt von der Abstimmung des Katalysatorsystems auf die konkurrierenden Reaktionen der Polyisocyanate mit den vorhandenen Hydroxylgruppen des Polyols und gegebenenfalls dem Wasser ab. Wird nun mit einem hydroxylgruppentragenden Flammschutzmittel eine weitere reaktive Komponente eingebracht, so kann es zu Herstellfehlern kommen, wie beispielsweise Schrumpfungen oder Risse. Das häufig aus mehreren Komponenten bestehende Katalysatorsystem muss dann unter Berücksichtigung der verwendeten Stabilisatoren, Treibmitteln, Zellregulatoren und gegebenenfalls weiteren Bestandteilen auf die Reaktivität des Flammschutzmittels abgestimmt werden. Diese Abstimmung macht zeitintensive Entwicklungsarbeiten notwendig.

Die beschriebenen Probleme sind um so kleiner, je niedriger die Hydroxylzahl und je kleiner die erforderliche Einsatzmenge eines reaktiven Flammschutzmittels sind. Daher werden reaktive Flammschutzmittel mit niedriger Hydroxylzahl und/oder hoher Wirksamkeit, also generell mit hohem Phosphorgehalt bevorzugt. Weiterhin ergibt sich bei hoch wirksamen reaktiven Flammschutzmitteln ein wirtschaftlicher Vorteil, da nicht nur die erforderliche Einsatzmenge des Flammschutzmittels, sondern auch die zusätzliche, zur Reaktion mit dem Flammschutzmittel erforderliche Menge an Polyisocyanat gering ist.

US 3,385,801 und DE 19 744 426 A1 (CA 2 246 634) beschreiben die Anwendung von 1-Hydroxyalkanphosphonsäureestem, wie beispielsweise 1-Hydroxymethanphosphonsäuredimethylester, als halogenfreie, reaktive Flammschutzmittel für Polyurethanschaumstoffe. Mit einer Hydroxylzahl von 382 mg KOH/g, einer Viskosität von 20 mPas (25 °C) und einem Phosphorgehalt von 22,1 % (DE 197 44 426 A1, S. 11, Z. 14 - 15) weist der 1-Hydroxymethanphosphonsäuredimethylester eine günstige Kombination von Eigenschaften auf. Nachteilig ist jedoch die von 1-Hydroxyalkanphosphonsäureestern bekannte Labilität gegenüber alkalischer Hydrolyse, siehe z. B. Methoden der organischen Chemie (Houben-Weyl), Ed. Eugen Müller, Band XII/1, S. 477, Georg Thieme Verlag, Stuttgart, 4. Auflage 1963. Diese Labilität schließt die Verwendung der 1-Hydroxyalkanphosphonsäureester in lagerfähigen Polyolzubereitungen, die als Treibmittel Wasser und als Katalysatoren Amine enthalten, aus.

In US 4,165,411 wird ein flammgeschützter Polyurethanschaumstoff beschrieben, der aus einem isocyanatgruppenhaltigen Präpolymer in Gegenwart von 6,5 bis 390 mol Wasser pro mol Isocyanatgruppen im Präpolymer hergestellt wird. Unter einem Präpolymer ist in diesem Zusammenhang das Reaktionsprodukt aus mindestens einem Polyol und mindestens einem Polyisocyanat zu verstehen, worin nach vollständiger Umsetzung ein Überschuss an Isocyanatgruppen vorliegt. Diese Isocyanatgruppen des Präpolymers stehen für weitere Umsetzungen zur Verfügung, wie beispielsweise dem Aufschäumen mit einem wasserhaltigen Treibmittel.

Als Flammschutzmittel enthalten die Polyurethanschaumstoffe in US 4,165,411 bezogen auf das Gesamtgewicht des trockenen Schaums 45 bis 70 % Aluminiumhydroxid und 2 bis 20 % eines phosphorhaltigen Flammschutzmittels. Das phosphorhaltige Flammschutzmittel kann auch "Dimethylhydroxyethylphosphonat" sein. Für die Substanz "Dimethylhydroxyethylphosphonat" wird jedoch keine Formel und keine Herstellvorschrift angegeben. So bleibt unklar, ob es sich dabei um den 1-Hydroxyethanphosphonsäuredimethylester oder den 2-Hydroxyethanphosphonsäuredimethylester handelt.

Der in US 4,165,411 beanspruchte Schaumstoff weist gravierende Nachteile auf. Die Schaumstoffherstellung kann nicht einstufig durchgeführt werden, sondern muss zeitaufwändig über die Zwischenstufe des Präpolymers erfolgen. Da nahezu alle Anwendungen einen trockenen Schaumstoff erfordern, muss die große Menge an überschüssigem Wasser wieder durch Trocknen entfernt werden (US 4,165,411, Sp. 9, Z. 46). Dies ist langwierig und energieaufwändig. Darüber hinaus beschleunigt der große Wasserüberschuss das Aufschäumen infolge von Isocyanatgruppen-Hydrolyse so sehr, dass ein Katalysator nicht mehr erforderlich ist. Dies wird zwar in US 4,165,411 als Vorteil angesehen, ist jedoch nach dem aktuellen Stand der Technik ein Nachteil, da die übliche Steuerung der Schaumeigenschaften durch ein angepasstes Katalysatorsystem unmöglich wird. Im Hinblick auf die Verwendung von reaktiven Flammschutzmitteln kann der große Wasserüberschuss den vollständigen Einbau des Flammschutzmittels verhindern, da Flammschutzmittel und Wasser um die begrenzte Isocyanatmenge konkurrieren. Der erforderliche Einsatz einer großen Menge an Aluminiumhydroxid ist schließlich nachteilig, da die Dosierung eines Feststoffes aufwändig ist und das Aluminiumhydroxid wegen seiner im Vergleich zu den anderen Einsatzstoffen hohen Dichte von 2,4 g/ml in der flüssigen Reaktionsmischung sedimentieren kann. Dies kann zu ungleichmäßigen Schaumstoffen führen.

Zu Fogging macht US 4,165,411 keine Aussagen.

Es ist Aufgabe der vorliegenden Erfindung, halogenfrei flammgeschützte Polyurethanschaumstoffe mit niedrigem Fogging zur Verfügung zu stellen, die einfach zu verarbeitende Flammschutzmittel beinhalten.

Überraschend wurde nun gefunden, dass weder ein Präpolymerverfahren, noch der Einsatz eines großen Wasserüberschusses noch die gleichzeitige Verwendung großer Mengen von Aluminiumhydroxid notwendig sind, um unter Verwendung von halogenfreien Hydroxyalkanphosphonsäurediestem als Flammschutzmittel flammgeschützte Polyurthanschaumstoffe herzustellen. Diese Schaumstoffe sind nicht nur einfach herstellbar, sondern zeichnen sich insbesondere durch ein niedriges Fogging aus.

Gegenstand der vorliegenden Erfindung sind demnach flammgeschützte Polyurethanschaumstoffe, die unter Verwendung von halogenfreien 2-Hydroxyalkanphosphonsäurediestern und/oder 3-Hydroxyalkanphosphonsäurediestern als Flammschutzmittel und einem Treibmittel, das nicht mehr als 1 mol Wasser pro 1 mol der zur Reaktion mit dem Wasser zur Verfügung stehenden Isocyanatgruppen enthält, hergestellt werden.

Der Begriff "halogenfrei" bedeutet, dass die Hydroxyalkanphosphonsäurediester die Elemente Fluor, Chlor, Brom und/oder Iod nicht enthalten.

Die erfindungsgemäßen Polyurethanschaumstoffe enthalten bevorzugt 2-Hydroxyalkanphosphonsäurediester und/oder 3-Hydroxyalkanphosphonsäurediester entsprechend der allgemeinen Formel (I) 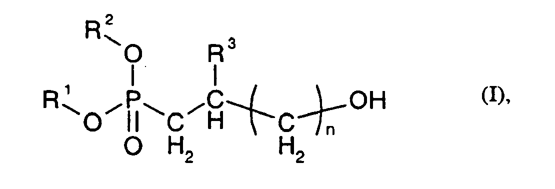 worin
- R¹ und R²: unabhängig voneinander für einen Rest C₁- bis C₈-Alkyl, C₁- bis C₄-Alkoxyethyl, optional C₁- bis C₄-Alkyl-substituiertes C₆- bis C₁₀-Aryl oder R¹ und R² zusammen für einen optional C₁- bis C₄-Alkyl-substituierten, sechsgliedrigen Ring stehen,
- R³: für Wasserstoff oder geradkettiges oder verzweigtes C₁- bis C₄-Alkyl steht und
- n: gleich 0 oder 1 ist.

In einer weiteren, besonders bevorzugten Ausführungsform sind R¹ und R² gleich und bedeuten entweder Methyl oder Ethyl.

In einer besonders bevorzugten Ausführungsform ist R³ Wasserstoff oder Methyl.

Ganz besonders bevorzugt enthalten die erfindungsgemäßen Polyurethanschaumstoffe 2-Hydroxyethanphosphonsäuredimethylester, Formel (II), 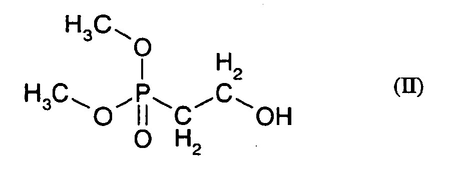 und/oder 2-Hydroxyethanphosphonsäurediethylester, Formel (III),

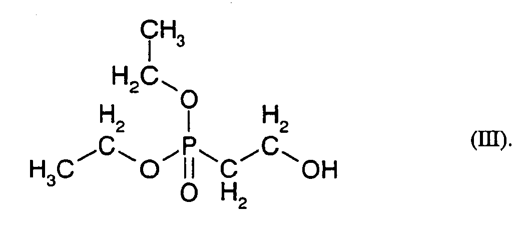

Bevorzugt handelt es sich bei den 2-Hydroxyalkanphosphonsäurediestern beziehungsweise 3-Hydroxyalkanphosphonsäurediestern um bei der Verarbeitungstemperatur flüssige Verbindungen. Unter der Verarbeitungstemperatur wird hierbei die Temperatur verstanden, bei der die Polyurethanrohstoffe den Dosier- und Mischaggregaten der Verschäumanlagen zugeführt werden. In der Regel werden hier in Anhängigkeit der Viskositäten der Komponenten und Auslegung der Dosieraggregate Temperaturen zwischen 20 und 80°C gewählt.

Bevorzugt weisen die 2-Hydroxyalkanphosphonsäurediester beziehungsweise 3-Hydroxyalkanphosphonsäurediester eine niedrige Viskosität auf.

Bevorzugt sind die 2-Hydroxyalkanphosphonsäurediester beziehungsweise 3-Hydroxyalkanphosphonsäurediester gegenüber den zur Herstellung der Polyurethanschaumstoffe eingesetzten Isocyanaten reaktiv und liegen in den Polyurethanschaumstoffen daher überwiegend nicht als solche, sondern beispielsweise über Urethangruppen an das Polyurethan gebunden vor.

Die erfindungsgemäßen Polyurethanschaumstoffe werden unter Verwendung von Treibmitteln hergestellt. Als Treibmittel sind alle zur Herstellung von Polyurethanschaumstoffen gebräuchlichen Substanzen geeignet. Beispiele hierfür sind Wasser, leicht flüchtige organische Substanzen wie z. B. n-Pentan, i-Pentan, Cyclopentan, halogenhaltige Alkane, wie Trichlormethan, Methylenchlorid oder Chlorfluoralkane, sowie Gase wie z. B. CO₂. Auch eine Mischung mehrerer Treibmittel kann verwendet werden.

Enthält in einer bevorzugten Ausführungsform der vorliegenden Erfindung das Treibmittel Wasser, so wird erfindungsgemäß nicht mehr als 1 mol Wasser pro 1 mol der zur Reaktion mit dem Wasser zur Verfügung stehenden Isocyanatgruppen eingesetzt. Im Zusammenhang mit der vorliegenden Erfindung wird unter der Molzahl der zur Reaktion mit dem Wasser zur Verfügung stehenden Isocyanatgruppen die Differenz zwischen der Molzahl aller eingesetzten Isocyanatgruppen und der Molzahl der gegenüber Isocyanatgruppen reaktiven Wasserstoffatome mit Ausnahme des Wassers verstanden. Diese stöchiometrische Rechnung beinhaltet keine Aussagen über die tatsächlich bei der Schaumherstellung ablaufenden Reaktionen. In diesem Sinne ist es gleich, ob die Gesamtmenge an Isocyanatgruppen nacheinander oder gleichzeitig mit Polyol und Wasser umgesetzt wird. Findet die Umsetzung wie beim Präpolymerverfahren nacheinander statt, so ist die Molzahl der zur Reaktion mit dem Wasser zur Verfügung stehenden Isocyanatgruppen gleich der Molzahl der Isocyanatgruppen im Präpolymer.

In einer weiteren, besonders bevorzugten Ausführungsform enthält das Treibmittel nicht mehr als 0,6 mol Wasser pro 1 mol der zur Reaktion mit dem Wasser zur Verfügung stehenden Isocyanatgruppen. Die Ausdrucksweise "nicht mehr als 1 mol oder 0,6 mol" schließt den Wert 0 mit ein. Erfindungsgemäß muß also auch gar kein Wasser im Treibmittel anwesend sein.

Die erfindungsgemäßen, flammgeschützten Polyurethanschaumstoffe werden hergestellt, indem man organische Polyisocyanate mit Verbindungen mit mindestens zwei gegenüber Isocyanaten reaktionsfähigen Wasserstoffatomen mit den genannten Treibmitteln sowie mit üblichen Katalysatoren, Stabilisatoren, Aktivatoren und/oder weiteren üblichen Hilfs- und Zusatzstoffen in Gegenwart von halogenfreien 2-Hydroxyalkanphosphonsäurediestern und/oder 3-Hydroxyalkanphosphonsäurediestern umsetzt.

Die 2-Hydroxyalkanphosphonsäurediester und/oder 3-Hydroxyalkanphosphonsäurediester sind in den erfindungsgemäßen Polyurethanschaumstoffen bevorzugt in einer Menge von 0,1 bis 20 Gew.-%, besonders bevorzugt 0,5 bis 16 Gew.-%, bezogen auf den fertigen Polyurethanschaumstoff, enthalten.

Wie in US 4 165 411 beschrieben ist dort die Anwesenheit von Aluminiumhydroxid ein wesentlicher Bestandteil der Schaumstoffe. Im Rahmen der vorliegenden Erfindung wurde jedoch gefunden, dass durch Einsatz der 2-Hydroxyalkanphosphonate und/oder 3-Hydroxyalkanphosphonate Aluminiumhydroxid zwar eingesetzt werden kann aber nicht zwingend notwendig ist. Die vorliegende Erfindung betrifft deshalb in einer bevorzugten Ausführungsform flammgeschützte Schaumstoffe, die neben halogenfreien 2-Hydroxyalkanphosphonsäurediestern und/oder 3-Hydrogenalkanphosphorsäurediestern weniger als 40 Gew.-%, vorzugsweise weniger als 20 Gew.-%, besonders bevorzugt weniger als 10 Gew.-% Aluminiumhydroxid enthalten. Je nach Anforderungen an die Schaumstoffe ist auch gar kein Aluminiumhydroxid enthalten. Die Erfindung betrifft ferner die Verwendung von halogenfreien 2-Hydroxyalkanphosphonsäurediestern und/oder 3-Hydroxyalkanphosphonsäurediestern als Flammschutzmittel für Polyurethane, die weniger als 40 Gew.-%, vorzugsweise weniger als 20 Gew.-%, insbesondere weniger als 10 Gew.-% Aluminiumhydroxid enthalten.

Bei den Polyurethanschaumstoffen handelt es sich um Schaumstoffe auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Schaumstoffen auf Isocyanatbasis ist bekannt und z. B. in DE-OS 16 94 142 (= GB 1 211 405), DE-OS 16 94 215 (= US 3 580 890) und DE-OS 17 20 768 (= US 3 620 986) sowie im Kunststoff-Handbuch Band VII, Polyurethane, herausgegeben von G. Oertel, Carl-Hanser-Verlag München, Wien 1993, beschrieben.

Polyurethanschaumstoffe werden grob in weiche und harte Schaumstoffe unterschieden. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstrukur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 16 - 130 kg/m³ auf. Besonders bevorzugt weisen sie Raumgewichte von 20 - 40 kg/m³ auf.

Für die Herstellung der Schaumstoffe auf Isocyanatbasis werden folgende Ausgangskomponenten eingesetzt:
1. Aliphatische, cycloaliphatische, araliphatische, aromatische und heterocyclische Polyisocyanate (z. B. W. Siefken in Justus Liebigs Annalen der Chemie, 562, S. 75-136), beispielsweise solche der Formel Q(NCO)ₙ, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.
2. Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Die Polyolmischung zur Herstellung der Weichschäume kann auch kleinere Anteile von Polyetheresterpolyolen mit Molmassen von 240 bis 1.200 g/mol und 2 bis 3 Hydroxylgruppen pro Molekül enthalten. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether, Polyester oder Polyetherester sowie Polycarbonate und Polyesteramide, wie sie für die Herstellung von homogenen und von zellförmigen Polyurethanen an sich bekannt sind und wie sie etwa in der DE-OS 28 32 253 (= US 4 263 408) und in EP 1 555 275 A2 (= US 2005 159 500) beschrieben werden. Die mindestens zwei Hydroxylgruppen aufweisenden Polyether und Polyester sind erfindungsgemäß bevorzugt.
   Die erfindungsgemäßen Polyurethanschaumstoffe lassen sich also durch entsprechende, leicht dein Stand der Technik zu entnehmende Wahl der Ausgangsstoffe als Hart- oder Weichschaumstoffe herstellen.
   Gegebenenfalls werden als weitere Ausgangskomponenten Verbindungen mit mindestens zwei gegenüber Isocyanaten reaktionsfähigen Wasserstoffatomen und einem Molekulargewicht von 32 bis 399 eingesetzt. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 (= US 4 263 408) beschrieben.
3. Gegebenenfalls werden Hilfs- und Zusatzmittel mitverwendet, wie Katalysatoren der bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292/US 4 248 930). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

Als weitere Flammschutzmittel können neben den erfindungsgemäß einzusetzenden 2-Hydroxyalkanphosphonsäurediestern und/oder 3-Hydroxyalkanphosphonsäurediestern in den Polyurethanschaumstoffen
a) organische Phosphorverbindungen, wie beispielsweise Triethylphosphat, Triphenylphosphat, Diphenylkresylphosphat, Trikresylphosphat, isopropylierte oder butylierte Arylphosphate, aromatische Bisphosphate, Neopentylglycol-bis(diphenylphosphat), chlorhaltige Phosphorsäureester wie z. B. Tris(chlorisopropyl)phosphat oder Tris(dichloropropyl)phosphat, Dimethylmethanphosphonat, Diethylethanphosphonat, Dimethylpropanphosphonat, oligomere Phosphate oder Phosphonate, Hydroxylgruppen-haltige Phosphorverbindungen, 5,5-Dimethyl-1,3,2-Dioxaphosphorinane-2-oxid-Derivate,
b) salzartige Phosphorverbindungen, wie beispielsweise Ammoniumphosphat, Ammoniumpolyphosphat, Melaminphosphat, Melaminpolyphosphat, Metallsalze von Dialkylphosphinsäuren, Metallsalze von Alkanphosphonsäuren,
c) Stickstoffverbindungen, wie beispielsweise Melamin, Melamincyanurat,
d) Chlor- und Bromverbindungen, wie beispielsweise Alkylester einer Tetrabrombenzoesäure, bromhaltige Diole hergestellt aus Tetrabromphthalsäureanhydrid, brom- und/oder chlorhaltige Polyole, bromhaltige Diphenylether,
e) anorganische Flammschutzmittel, wie beispielsweise Aluminiumhydroxid, Boehmit, Magnesiumhydroxid, Blähgraphit oder Tonmineralien
enthalten sein.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl-Hanser-Verlag, München, 1993, auf den Seiten 104 bis 123 beschrieben.

Gegenstand der vorliegenden Erfindung ist bevorzugt ein Verfahren zur Herstellung von flammgeschützten Polyurethanschaumstoffen durch Umsetzung von organischen Polyisocyanaten mit Verbindungen mit mindestens zwei gegenüber Isocyanaten reaktionsfähigen Wasserstoffatomen und üblichen Katalysatoren, Stabilisatoren, Aktivatoren und/oder weiteren üblichen Hilfs- und Zusatzstoffen bei 20 bis 80 °C, dadurch gekennzeichnet, dass als Flammschutzmittel in einer Menge von 0,1 bis 40 Teilen, bevorzugt 1 bis 30 Teilen bezogen auf 100 Teile Polyolkomponente, halogenfreie 2-Hydroxyalkanphosphonsäurediester und/oder 3-Hydroxyalkanphosphonsäurediester eingesetzt werden und dass als Treibmittel nicht mehr als 1 mol Wasser pro 1 mol der zur Reaktion mit dem Wasser zur Verfügung stehenden Isocyanatgruppen eingesetzt wird.

In einer weiteren bevorzugten Ausführungsform werden beim erfindungsgemäßen Verfahren 2-Hydroxyalkanphosphonsäurediester und/oder 3-Hydroxyalkanphosphonsäurediester entsprechend der allgemeinen Formel (I) 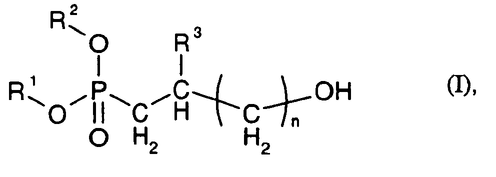 eingesetzt, worin
- R¹ und R²: unabhängig voneinander für einen Rest C₁- bis C₈-Alkyl, C₁- bis C₄-Alkoxyethyl, optional C₁- bis C₄-Alkyl-substituiertes C₆- bis C₁₀-Aryl oder R¹ und R² zusammen für einen optional C₁- bis C₄-Alkyl-substituierten, sechsgliedrigen Ring stehen,
- R³: für Wasserstoff oder geradkettiges oder verzweigtes C₁- bis C₄-Alkyl steht und
- n: gleich 0 oder 1 ist.

In einer weiteren bevorzugten Ausführungsform sind R¹ und R² gleich und bedeuten entweder Methyl oder Ethyl.

In einer weiteren bevorzugten Ausführungsform bedeutet R³ Wasserstoff oder Methyl.

Ganz besonders bevorzugt werden in dem erfindungsgemäßen Verfahren 2-Hydroxyethanphosphonsäuredimethylester, Formel (II), 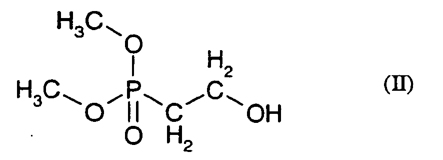 und/oder 2-Hydroxyethanphosphonsäurediethylester, Formel (III), 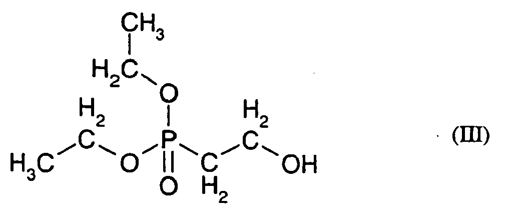 eingesetzt.

Bei der Durchführung des erfindungsgemäßen Verfahrens werden die oben beschriebenen Reaktionskomponenten nach dem bekannten Einstufenverfahren, dem Prepolymerverfahren oder dem Semiprepolymerverfahren zur Umsetzung gebracht, wobei man sich oft maschineller Einrichtungen bedient, wie beispielsweise in US 2,764,565 beschrieben. Einzelheiten über Verarbeitungseinrichtungen, die auch erfindungsgemäß in Frage kommen, werden im Kunststoff-Handbuch Band VII, Polyurethane, herausgegeben von G. Oertel, Carl-Hanser-Verlag, München, Wien 1993, auf den Seiten 139 bis 192 beschrieben.

Nach dem erfindungsgemäßen Verfahren lassen sich auch kalthärtende Schaumstoffe herstellen (GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von flammgeschützten Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach der Erfindung erhältlichen Produkte finden z. B. folgende Anwendung: Möbelpolsterungen, Textileinlagen, Matratzen, Sitze, bevorzugt Flugzeugsitze oder Automobilsitze, Armlehnen und Bauelemente sowie Sitz- und Armaturverkleidungen.

Die in den erfindungsgemäßen Polyurethanschaumstoffen enthaltenen beziehungsweise im erfindungsgemäßen Verfahren eingesetzten 2-Hydroxyalkanphosphonsäurediester und/oder 3-Hydroxyalkanphosphonsäurediester sind entweder bekannt oder lassen sich nach bekannten Methoden herstellen. Dabei kommen im industriellen Maßstab verfügbare Ausgangsmaterialien zum Einsatz, die die gewünschten Endprodukte einfach herzustellen erlauben.

Die Verbindung 2-Hydroxyethanphosphonsäuredimethylester, Formel (II), CAS Reg.-No. 54731-72-5, ist kommerziell erhältlich und kann aus 2-Acetoxyethanphosphonsäuredimethylester und Methanol in Gegenwart eines sauren Ionenaustauschers, wie in DE-OS 2 313 355, Beispiel 1, beschrieben, hergestellt werden.

Die Herstellung der Verbindung 2-Hydroxyethanphosphonsäurediethylester, Formel (III), CAS Reg.-No. 39997-40-5, aus Diethylphosphit, Natrium und Ethylenoxid ist in US 3,699,195, Beispiel 1, beschrieben.

Die flüssigen 2-Hydroxyalkanphosphonsäurediester beziehungsweise 3-Hydroxyalkanphosphonsäurediester haben niedrige Viskositäten und sind daher leicht zu dosieren. Aufgrund ihres hohen Phosphorgehaltes sind sie hoch wirksam, so dass sich schon mit kleinen Einsatzmengen Schaumstoffe herstellen lassen, die nicht nur den Anforderungen an Flammwidrigkeit entsprechen, sondern auch besonders niedrige Foggingwerte zeigen.

Anhand der nachfolgenden Beispiele wird die Erfindung näher erläutert, ohne dass dadurch eine Einschränkung der Erfindung bewirkt werden soll.

### Beispiele

Polyurethanweichschaum

Die angegebenen Teile beziehen sich auf das Gewicht.

### Verwendete Materialien

| Komponente | Funktion | Beschreibung |
|---|---|---|
| A | Polyol | Arcol^{®} 1105 (Bayer MaterialScience AG), Polyetherpolyol mit Hydroxylzahl 56 mg KOH/g |
| B | Treibmittel | Wasser |
| C | Katalysator | Niax^{®} A-1 (GE Silicones), 70 %ige Lösung von Bis(2-dimethylaminoethyl)ether in Dipropylenglykol |
| D | Katalysator | Desmorapid^{®} SO (Rhein Chemie), Zinn-(II)-2-ethylhexanoat |
| E | Katalysator | RC-PUR^{®} Aktivator 105 (Rhein Chemie), Lösung von Triethylendiamin in Dipropylenglykol |
| F1 | Flammschutzmittel | Tris(2,3-dichlorisopropyl)phosphat, TDCP, CAS Reg.-No. 13674-87-8 |
| F2 | Flammschutzmittel | Diphenylkresylphosphat, CAS Reg.-No. 26444-49-5 |
| F3 | Flammschutzmittel | 2-Hydroxyethanphosphonsäuredimethylester, Formel (II), CAS Reg.-No. 5473.1-72-5 |
| G | Stabilisator | Tegostab^{®} B 8232 (Degussa AG), Siliconstabilisator |
| H | Diisocyanat | Desmodur^{®} T 80 (Bayer MaterialScience AG), Toluylendiisocyanat, Isomerenmischung |
| I | Diisocyanat | Desmodur^{®} T 65 (Bayer MaterialScience AG), Toluylendiisocyanat, Isomerenmischung |

Der verwendete 2-Hydroxyethanphosphonsäuredimethylester hatte eine Säurezahl von 0,07 mg KOH/g, eine Hydroxylzahl von 364 mg KOH/g, einen Wassergehalt von 0,01 %, eine Viskosität von 22 mPas bei 23 °C und einen Phosphorgehalt von 20 %.

### Herstellung von Polyurethanweichschaumstoffen

Die in Tabelle 1 nach Art und Menge angegebenen Komponenten mit Ausnahme der Diisocyanate (Komponenten H und I) wurden zu einer homogenen Mischung verrührt. Dann wurden die Diisocyanate zugefügt und kurz intensiv untergerührt. Nach einer Startzeit von 15 - 20 s und einer Steigzeit von 130 - 140 s wurde ein Polyurethanweichschaumstoff mit einem Raumgewicht von 31 kg/m³ erhalten.

### Bestimmung der Flammwidrigkeit

Die Polyurethanweichschaumstoffe wurden nach den Vorgaben des Federal Motor Vehicle Safety Standards FMVSS-302 getestet. Dabei wurden in einer horizontalen Halterung befestigte Schaumstoff-Probenkörper der Maße 210 mm x 95 mm x 15 mm (L x B x H) mittig an der kurzen Kante für 15 s mit einer 40 mm hohen Gasbrennerflamme entzündet und nach Entfernung der Zündflamme die Flammausbreitung beobachtet. Je nachdem, ob und wie weit der Probenkörper weiterbrannte, wurde er den Brandklassen SE (selbsterlöschend, weniger als 38 mm der Probe angebrannt), SE/NBR (selbstverlöschend innerhalb von 60 s/keine Angabe der Brennrate), SE/B (selbsterlöschend/Brennrate messbar), BR (brennt bis zum Probenende, Brennrate messbar) und RB (schnell brennend, Brennrate nicht messbar) zugeordnet. Die Brandversuche wurden für jedes Beispiel fünfmal durchgeführt. Das schlechteste Ergebnis jeder Fünferreihe ist in Tabelle 1 wiedergegeben.

### Bestimmung des Foggings

Das Foggingverhalten der Polyurethanweichschaumstoffe wurde gemäß DIN 75201 B untersucht. Dabei wurden zylindrische Schaumstoff-Probenkörper der Maße 80 mm x 10 mm (Ø x H) für 16 h auf 100°C erhitzt und die während dieser Zeit an einer auf 21°C gekühlten, oberhalb der Probenkörper positionierten Aluminiumfolie niedergeschlagenen Kondensatmengen ausgewogen. Die gemessenen Kondensatmengen sind in Tabelle 1 wiedergegeben.

**Tabelle 1: Zusammensetzung (Teile) und Prüfergebnisse des erfindungsgemäßen Beispiels B1 und der nicht erfindunsgemäßen Vergleichsbeispiele V1 bis V3**

| **Beispiel** | **V1** | **V2** | **V3** | **B1** |
|---|---|---|---|---|
| A | 100 | 100 | 100 | 100 |
| B | 4,0 | 4,0 | 4,0 | 4,0 |
| C | 0,10 | 0,10 | 0,10 | 0,10 |
| D | 0,16 | 0,16 | 0,16 | 0,16 |
| E | 0,20 | 0,20 | 0,20 | 0,20 |
| G | 1,30 | 1,30 | 1,30 | 1,30 |
| F1 | | 4 | | |
| F2 | | | 4 | |
| F3 | | | | 4 |
| H | 25,3 | 25,3 | 25,3 | 26,5 |
| I | 25,3 | 25,3 | 25,3 | 26,5 |
| Index | 106,5 | 106,5 | 106,5 | 106,5 |
| Wasser/Isocyanat*) | 0,46 | 0,46 | 0,46 | 0,46 |
| MVSS-Klasse | RB | SE | BR | SE |
| Fogging-Kondensat [mg] gemäß DIN 75201 B | 0,14 | 0,38 | 0,36 | 0,18 |

| | | | | |
|---|---|---|---|---|
| *) mol Wasser pro 1 mol der zur Reaktion mit dem Wasser zur Verfügung stehenden Isocyanatgruppen | | | | |

### Ergebnisse

In Abwesenheit eines Flammschutzmittels (Vergleichsbeispiel V1) brennt der Polyurethanweichschaumstoff rasch ab (RB), zeigt aber einen sehr niedrigen Foggingwert. Die Ausrüstung mit dem häufig verwendeten Flammschutzmittel Tris(2,3-dichlorisopropyl)phosphat (Vergleichsbeispiel V2) führt zu einem erhöhtem Fogging (0,38), bringt aber die oben beschriebenen Nachteile eines halogenhaltigen Flammschutzmittels mit. Mit der Verwendung des halogenfreien Flammschutzmittels Diphenylkresylphosphat (Vergleichsbeispiel V3) wird dieses Problem zwar umgangen, aber die Flammschutzwirkung ist unzureichend (BR). Das Beispiel 1 (B1) zeigt, dass sich die erfindungsgemäßen, halogenfreien Polyurethanweichschaumstoffe durch die beste Brandklasse SE (selbsterlöschend) in allen Wiederholungen des Brandversuchs und durch einen sehr niedrigen Foggingwert (0,18) auszeichnen.

### Polyurethanhartschaum

Die angegebenen Teile beziehen sich auf das Gewicht.

### Verwendete Materialien

| Komponente | Funktion | Beschreibung |
|---|---|---|
| A | Polyol | Stepanol^{®} PS-2352 (Stepan), Polyesterpolyol mit Hydroxylzahl 240 mg KOH/g |
| B | Treibmittel | Wasser |
| C | Treibmittel | n-Pentan |
| D | Katalysator | DABCO^{®} K-15 (Air Products), Kaliumoctoat-Formulierung |
| E | Katalysator | DABCO^{®} 2097 (Air Products), Kaliumacetat-Formulierung |
| G | Katalysator | Polycat^{®} 5 (Air Products), Pentamethyldiethylentriamin |
| H | Stabilisator | DABCO^{®} DC-5598 (Air Products), Siliconstabilisator |
| I | Diisocyanat | Desmodur^{®} 44 V 40 L (Bayer MaterialScience AG), polymeres Diphenylmethandiisocyanat, Isocyanat-Gehalt: 31,5 Gew.-% |
| F1 | Flammschutzmittel | Tris(chlorisopropyl)phosphat, TCPP, CAS-Reg.-No. 13674-84-5 |
| F2 | Flammschutzmittel | Triethylphosphat, TEP, CAS Reg.-No. 78-40-0 |
| F3 | Flammschutzmittel | 2-Hydroxyethanphosphonsäuredimethylester, Formel (II), CAS Reg.-No. 54731-72-5 |

### Herstellung von Polyurethanhartschaumstoffen

Die in Tabelle 2 nach Art und Menge angegebenen Komponenten mit Ausnahme des Diisocyanats (Komponente I) wurden zu einer homogenen Mischung verrührt. Dann wurde das Diisocyanat zugefügt und kurz intensiv untergerührt. Nach einer Startzeit von 10 - 15 s und einer Steigzeit von 40 - 50 s wurde ein Polyurethanhartschaumstoff mit einem Raumgewicht von 28 kg/m³ erhalten.

### Bestimmung der Flammwidrigkeit

Die Polyurethanhartschaumstoffe wurden nach den Vorgaben von DIN 4102-1 getestet. Dabei wurden in einer vertikalen Halterung hochkantig befestigte Schaumstoff-Probenkörper der Maße 190 mm x 90 mm x 15 mm (L x B x H) mittig an der unteren Kante für 15 s mit einer schräg gegen den Probenkörper gerichteten, 20 mm hohen Gasbrennerflamme entzündet und die mittlere Flammenhöhe am Probenkörper gemessen. Die mittlere Flammenhöhe und die daraus resultierende Zuordnung zu den Brandklassen B2 (normalentflammbar) und B3 (leichtentflammbar) sind in Tabelle 2 wiedergegeben. Je kleiner die mittlere Flammenhöhe, desto großer die Effektivität des Flammschutzmittels.

**Tabelle 2: Zusammensetzung (Teile) und Prüfergebnisse des erfindungsgemäßen Beispiels B2 und der nicht erfindunsgemäßen Vergleichsbeispiele V5 bis V6**

| **Beispiel** | **V5** | **V6** | **B2** |
|---|---|---|---|
| A | 100 | 100 | 100 |
| B | 0,5 | 0,5 | 0,5 |
| C | 24,3 | 24,3 | 24,3 |
| D | 1,9 | 1,9 | 1,9 |
| E | 0,35 | 0,35 | 0,35 |
| G | 0,25 | 0,25 | 0,25 |
| H | 2,5 | 2,5 | 2,5 |
| I (Index 300) | 205 | 205 | 263 |
| F1 | 25 | | |
| F2 | | 25 | |
| F3 | | | 25 |
| Wasser/Isocyanat*) | 0,03 | 0,03 | 0,02 |
| DIN 4102-1 Klasse | B2 | B3 | B2 |
| Mittlere Flammhöhe [mm] | 143 | 146 | 121 |

| | | | |
|---|---|---|---|
| *) mol Wasser pro 1 mol der zur Reaktion mit dem Wasser zur Verfügung stehenden Isocyanatgruppen | | | |

### Ergebnisse

Die Versuche zeigen, dass mit dem halogenhaltigen Flammschutzmittel TCPP (Vergleichsbeispiel V5) eine B2-Klassifizierung erreicht wird, wogegen mit der gleichen Menge des halogenfreien Flammschutzmittels TEP (Vergleichsbeispiel V6) nur die Klassifizierung B3 erreicht werden kann. Das Beispiel B2 mit dem erfindungsgemäßen halogenfreien Flammschutzmittel dagegen erreicht die Klassifizierung B2 mit einer deutlich niedrigeren mittleren Flammhöhe, als die Vergleichsbeispiele V5 und V6.

## Patentansprüche

1. Flammgeschützte Polyurethanschaumstoffe, **dadurch gekennzeichnet, dass** zu ihrer Herstellung als Flammschutzmittel halogenfreie 2-Hydroxyalkanphosphonsäurediester und/oder 3-Hydroxyalkanphosphonsäurediester eingesetzt werden und ein Treibmittel verwendet wird, das nicht mehr als 1 mol Wasser pro 1 mol der zu Reaktion mit dem Wasser zur Verfügung stehenden Isocyanatgruppen enthält.

2. Flammgeschützte Polyurethanschaumstoffe nach Anspruch 1, **dadurch gekennzeichnet, dass** diese 2-Hydroxyalkanphosphonsäurediester und/oder 3-Hydroxyalkanphosphonsäurediester der allgemeinen Formel (I) 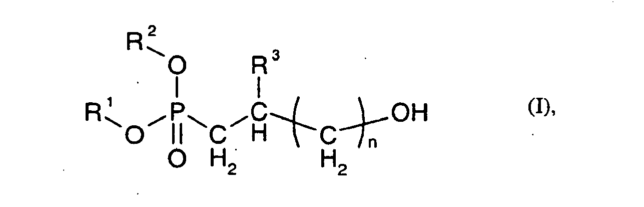 enthalten, worin
R¹ und R² unabhängig voneinander für C₁- bis C₈-Alkyl, C₁- bis C₄-Alkoxyethyl, optional C₁- bis C₄-Alkyl-substituiertes C₆- bis C₁₀-Aryl oder R¹ und R² zusammen für einen optional C₁- bis C₄-Alkyl-substituierten, sechsgliedrigen Ring stehen,
R³ für Wasserstoff oder geradkettiges oder verzweigtes C₁- bis C₄-Alkyl steht und
n gleich 0 oder 1 ist.

3. Flamm-geschützte Polyurethanschaumstoffe nach Anspruch 1 und/oder 2, die als Flammschutzmittel 2-Hydroxyethanphosphonsäuredimethylester oder 2-Hydroxyethanphosphonsäurediethylester enthalten.

4. Flammgeschützte Polyurethanschaumstoffe nach mindestens einem der Ansprüche 1 bis 3, **dadurch gekennzeichnet, dass** sie die 2-Hydroxyalkanphosphonsäurediester und/oder 3-Hydroxyalkanphosphonsäurediester in einer Menge von 0,1 bis 20 Gew.-%, bevorzugt 0,5 bis 16 Gew.-%, bezogen auf den fertigen Polyurethanschaumstoff, enthalten.

5. Flammgeschützte Polyurethanschaumstoffe nach mindestens einem der Ansprüche 1 bis 4, **dadurch gekennzeichnet, dass** es sich dabei um Weichschaumstoffe oder um Hartschaumstoffe handelt.

6. Verfahren zur Herstellung von flammgeschützten Polyurethanschaumstoffen durch Umsetzung von organischen Polyisocyanaten mit Verbindungen mit mindestens zwei gegenüber Isocyanaten reaktionsfähigen Wasserstoffatomen und üblichen Katalysatoren, Stabilisatoren, Aktivatoren und/oder weiteren üblichen Hilfs- und Zusatzstoffen bei 20 bis 80 °C, **dadurch gekennzeichnet, dass** als Flammschutzmittel in einer Menge von 0,1 bis 40 Teilen, bevorzugt 1 bis 30 Teilen bezogen auf 100 Teile Polyolkomponente, halogenfreie 2-Hydroxyalkanphosphonsäurediester und/oder 3-Hydroxyalkanphosphonsäurediester eingesetzt werden und ein Treibmittel eingesetzt wird, das nicht mehr als 1 mol Wasser pro 1 mol der zur Reaktion mit dem Wasser zur Verfügung stehenden Isocyanatgruppen enthält.

7. Verfahren nach Anspruch 6, **dadurch gekennzeichnet, dass** es sich bei den 2-Hydroxyalkanphosphonsäurediestem und/oder 3-Hydroxyalkanphosphonsäurediestern um bei der Verarbeitungstemperatur flüssige Verbindungen handelt.

8. Verfahren nach Anspruch 7, **dadurch gekennzeichnet, dass** als Flammschutzmittel 2-Hydroxyethanphosphonsäuredimethylester oder 2-Hydroxyethanphosphonsäurediethylester eingesetzt werden.

9. Verwendung von halogenfreien 2-Hydroxyalkanphosphonsäurediestem und/oder 3-Hydroxyalkanphosphonsäurediestern als Flammschutzmittel für Polyurethane, die weniger als 40 Gew.-%, vorzugsweise weniger als 20 Gew.-%, insbesondere weniger als 10 Gew.-% Aluminiumhydroxid enthalten.

10. Verwendung der Polyurethanschaumstoffe gemäß mindestens einem der Ansprüche 1 bis 5 in Möbelpolsterungen, Textileinlagen, Matratzen, Sitzen, Armlehnen, Bauelementen sowie Sitz- und Armaturverkleidungen.

## Claims

1. Flame-retardant polyurethane foams, **characterized in that** their production uses, as flame retardant, halogen-free 2-hydroxyalkanephosphonic diesters and/or 3-hydroxyalkanephosphonic diesters, and uses a blowing agent which comprises not more than 1 mol of water per mole of the isocyanate groups available for reaction with the water.

2. Flame-retardant polyurethane foams according to Claim 1, **characterized in that** these comprise 2-hydroxyalkanephosphonic diesters and/or 3-hydroxyalkanephosphonic diesters of the general formula (I) 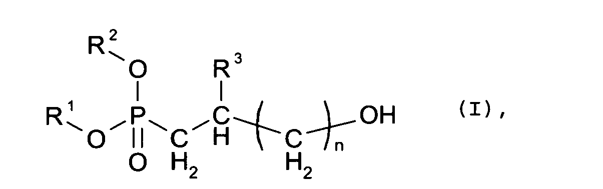 in which
R¹ and R² are, independently of one another, C₁-C₈-alkyl, C₁-C₄-alkoxyethyl, optionally C₁-C₄-alkyl-substituted C₆-C₁₀-aryl, or R¹ and R² together are an optionally C₁-C₄-alkyl-substituted, six-membered ring,
R³ is hydrogen or straight-chain or branched C₁-C₄-alkyl and
n is 0 or 1.

3. Flame-retardant polyurethane foams according to Claim 1 and/or 2, which comprise, as flame retardant, dimethyl 2-hydroxyethanephosphonate or diethyl 2-hydroxyethanephosphonate.

4. Flame-retardant polyurethane foams according to at least one of Claims 1 to 3, **characterized in that** they comprise an amount of from 0.1 to 20% by weight, preferably from 0.5 to 16% by weight, based on the finished polyurethane foam, of 2-hydroxyalkanephosphonic diester and/or 3-hydroxyalkanephosphonic diester.

5. Flame-retardant polyurethane foams according to at least one of Claims 1 to 4, **characterized in that** they are flexible foams or rigid foams.

6. Process for production of flame-retardant polyurethane foams via reaction of organic polyisocyanates with compounds having at least two hydrogen atoms reactive towards isocyanates, and with conventional catalysts, stabilizers, activators and/or other conventional auxiliaries and additives at from 20 to 80°C, **characterized in that** an amount of from 0.1 to 40 parts, preferably from 1 to 30 parts, based on 100 parts of polyol component, of halogen-free 2-hydroxyalkanephosphonic diester and/or 3-hydroxyalkanephosphonic diester are used as flame retardant, and a blowing agent is used which comprises not more than 1 mol of water per mole of the isocyanate groups available for reaction with the water.

7. Process according to Claim 6, **characterized in that** the 2-hydroxyalkanephosphonic diesters and/or 3-hydroxyalkanephosphonic diesters are compounds that are liquid at the processing temperature.

8. Process according to Claim 7, **characterized in that** dimethyl 2-hydroxyethanephosphonate or diethyl 2-hydroxyethanephosphonate is used as flame retardant.

9. Use of halogen-free 2-hydroxyalkanephosphonic diesters and/or 3-hydroxyalkanephosphonic diesters as flame retardant for polyurethanes which comprise less than 40% by weight, preferably less than 20% by weight, in particular less than 10% by weight, of aluminium hydroxide.

10. Use of the polyurethane foams according to at least one of Claims 1 to 5 in furniture padding, in textile inserts, in mattresses, in seats, in armrests, in modules, and also in seat coverings and cladding over technical equipment.

## Revendications

1. Mousses de polyuréthanne ignifuges, **caractérisées en ce que** pour leur fabrication des diesters de l'acide 2-hydroxyalcanephosphonique et/ou des diesters de l'acide 3-hydroxyalcanephosphonique sans halogène sont utilisés en tant qu'agent ignifuge et un agent gonflant, qui ne contient pas plus d'1 mole d'eau par mole des groupes isocyanates disponibles pour la réaction avec l'eau, est utilisé.

2. Mousses de polyuréthanne ignifuges selon la revendication 1, **caractérisées en ce que** celles-ci contiennent des diesters de l'acide 2-hydroxyalcanephosphonique et/ou des diesters de l'acide 3-hydroxyalcanephosphonique de formule générale (I) 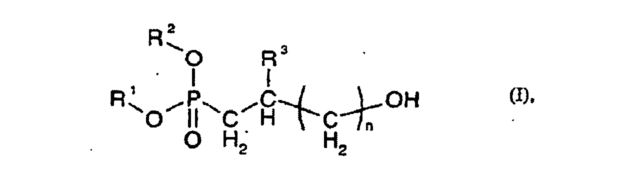 dans laquelle,
R¹ et R² représentent indépendamment l'un de l'autre un alkyle en C₁ à C₈, un alcoxyéthyle en C₁ à C₄, un aryle en C₆ à C₁₀ éventuellement substitué par un alkyle en C₁ à C₄ ou R¹ et R² représentent ensemble un cycle à six éléments éventuellement substitué par un alkyle en C₁ à C₄,
R³ représente l'hydrogène ou un alkyle en C₁ à C₄ linéaire ou ramifié et
n vaut 0 ou 1.

3. Mousses de polyuréthanne ignifuges selon la revendication 1 et/ou 2, qui contiennent en tant qu'agent ignifuge l'ester diméthylique de l'acide 2-hydroxyéthanephosphonique ou l'ester diéthylique de l'acide 2-hydroxyéthanephosphonique.

4. Mousses de polyuréthanne ignifuges selon au moins l'une quelconque des revendications 1 à 3, **caractérisées en ce qu'**elles contiennent les diesters de l'acide 2-hydroxyalcanephosphonique et/ou les diesters de l'acide 3-hydroxyalcanephosphonique en une quantité de 0,1 à 20 % en poids, de préférence de 0,5 à 16 % en poids, par rapport à la mousse de polyuréthanne finie.

5. Mousses de polyuréthanne ignifuges selon au moins l'une quelconque des revendications 1 à 4, **caractérisées en ce qu'**il s'agit de mousses souples ou de mousses dures.

6. Procédé de fabrication de mousses de polyuréthanne ignifuges par réaction de polyisocyanates organiques avec des composés contenant au moins deux atomes d'hydrogène réactifs avec les isocyanates et des catalyseurs, stabilisateurs, activateurs usuels et/ou d'autres adjuvants et additifs usuels à 20 à 80 °C, **caractérisé en ce** des diesters de l'acide 2-hydroxyalcanephosphonique et/ou des diesters de l'acide 3-hydroxyalcanephosphonique sans halogène sont utilisés en tant qu'agent ignifuge en une quantité de 0,1 à 40 parties, de préférence de 1 à 30 parties, par rapport à 100 parties de composant polyol, et un agent gonflant, qui ne contient pas plus d'1 mole d'eau par mole des groupes isocyanates disponibles pour la réaction avec l'eau, est utilisé.

7. Procédé selon la revendication 6, **caractérisé en ce que** les diesters de l'acide 2-hydroxyalcanephosphonique et/ou les diesters de l'acide 3-hydroxyalcanephosphonique sont des composés liquides à la température de traitement.

8. Procédé selon la revendication 7, **caractérisé en ce que** l'ester diméthylique de l'acide 2-hydroxyéthanephosphonique ou l'ester diéthylique de l'acide 2-hydroxyéthanephosphonique est utilisé en tant qu'agent ignifuge.

9. Utilisation de diesters de l'acide 2-hydroxyalcanephosphonique et/ou de diesters de l'acide 3-hydroxyalcanephosphonique sans halogène en tant qu'agent ignifuge pour des polyuréthannes, qui contiennent moins de 40 % en poids, de préférence moins de 20 % en poids, notamment moins de 10 % en poids, d'hydroxyde d'aluminium.

10. Utilisation des mousses de polyuréthanne selon au moins l'une quelconque des revendications 1 à 5 dans des rembourrages de meubles, des inserts textiles, des matelas, des sièges, des accoudoirs, des éléments de construction et dans des revêtements de sièges et d'armatures.
